# EUROPEAN PATENT APPLICATION

(11) **EP 1 589 415 A1**
(43) Date of publication of application: **26.10.2005**
(21) Application number: 04009096.1
(22) Date of filing: 16.04.2004
(51) Int. Cl.: G06F 9/44, G06F 3/00

(54) **Non-pattern based user interface in pattern based environment**

(71) Applicant: SAP AG, 69190 Walldorf (DE)
(72) Inventor: Bechtold, Johannes, 69242 Mülhausen (DE); Langlotz, Andrea, 68165 Mannheim (DE); Schaude, Horst, 76703 Kraichtal (DE); Braxton, Daniel, 68723 Plankstadt (DE)
(74) Representative: Walter, Philipe

(57) **Abstract**

The invention relates to a computer-implemented method, display, and computer program product for displaying data within a pattern based user interface. To allow flexibility when displaying data, the invention provides displaying data within a non-pattern based user interface together with the pattern based user interface within one display.

## Description

### FIELD OF THE INVENTION

The invention relates to a computer-implemented method for providing a user interface with providing an application for displaying data and/or interrogating user input within a pattern based user interface.

The invention further relates to a display of a user interface on a computer with displaying data and/or interrogating user input within a pattern based user interface.

Eventually, the invention relates to a computer program and a computer program product for providing a user-interface.

### BACKGROUND

In some software applications, for instance SAP software, such as Master Data Management (MDM), data may be accessed using graphical user interfaces (UI). One possible user interface may be a People Centric User Interface (PCUI), which may be a pattern based user interface (PBUI). Within pattern based user interfaces, different patterns may be defined. These patterns may define the arrangement of pattern components, such as search group containers, field group containers, toolbar group containers, tabstrip containers, or any other container. The containers may comprise fields to display data or buttons or menus in a defined manner. Insofar, pattern based user interfaces may define allowed combinations of user interface components on different hierarchy levels within an application. By that, it may be possible to define the positioning and sizing details for user interface components. The design and positioning object identification components and object editing components may be defined for objects in general.

Different patterns may be combined to build a floor plan. The floor plan may define the positioning of different patterns within a user interface. Using a floor plan, different applications may present their underlying data within a user interface, which may have the same look-and-feel according to the patterns. Different applications and functions with different types of data may use one floor plan. The floor plan may define where data is displayed and how data may be manipulated, even if the type of data may be different. The different data may, for example, be account management data, acquisition data, sales data, product data, analytics data, or any other business or non-business related data.

A pattern based user interface may provide a general structure of positioning and sizing of components within a display.

The pattern based user interface may be intuitive and easy to learn, as it may utilise the same patterns for navigation and layout on any screen within an application as well as within different applications. Development of new screens of sub-applications within an application may become easier, as the pre-defined elements and patterns of the floor plan of the pattern based user interface may be used by the developers for new screens. A pattern based user interface may be divided into different frames or windows. Each frame or window may represent one particular piece of information. Within each frame, one particular pattern may be used. The arrangement of the frames or windows may obey the floor plan of the PBUI. The look-and-feel of the frames and windows, however, may be always the same, as the same pattern may be used, independently of the application or sub-application.

The use of a pattern based user interface may have several advantages, including increased usability, simplicity, and uniformity across multiple applications as well as within one single application. A user might not need to learn the navigation of a new user interface with each application.

However, a pattern based user interface may as well be rigid and inflexible, with respect to positioning of objects, thus limiting not only the user's choice and the programmers' ability to develop new functionality within the context of available patterns of a pattern based user interface. In general, a pattern based user interface does not permit freestyle programming, such that it may be impossible to design a frame or window according to actual needs. It is not possible to use programming languages, for example such as hypertext markup language (HTML), or any other programming language, allowing positioning of objects freely within a frame. The use of patterns limits the user's choices. This may reduce the frequency and types of user-introduced data errors made when the user selects by mistake the wrong option or functionality or enters the wrong data without a noticing the mistake.

### SUMMARY

The invention overcomes these problems by providing a user interface with providing an application for displaying data and/or interrogating user input within a pattern based user interface, and providing within the application a non-pattern based user interface at least for displaying data.

By incorporating non-pattern based (NPB) frames or windows within a pattern based user interface, limitations presented within a pattern based user interface may be overcome. Freestyle programming of the design of frames may, for example, be possible, and any data or data format may be displayed within a non-pattern based user interface. Non-pattern based user interfaces, such as frames or windows, within the application, may have the advantage of added flexibility within a pattern based user interface environment, which as such may be inflexible.

Programming, presentation and functionality may be improved due to non-pattern based interfaces, and also the frequency and types of user-introduced data errors may be reduced by the use of pattern based user interfaces. The combination of pattern based user interfaces and non-pattern based user interfaces introduces flexibility in combination with usability. If required, it may, for example, also be possible to provide the illusion of continuity of patterns available in the pattern based user interface within the non-pattern based user interface. This may be achieved by programming the non-pattern based user interface to look like the pattern based user interface. Insofar, above-mentioned advantages may be propagated without the loss of increased flexibility.

According to embodiments, the invention provides a computer implemented method with displaying business object data of at least two business objects within the non-pattern based user interface.

Business objects may comprise information about any piece of business related objects. Business objects may be, for example data objects, which may relate to various areas within a company. This may, for example, be client data, factory structures, machine structures, production sequences, lists of materials, lists of staff, and many other data. The contents of the data objects may reproduce the current state of the particular company structure. Maintenance and operation of the company may be assisted by the use of enterprise resource planning software, such as SAP R/3. Displaying data of data objects might require flexibility in terms of positioning of a data. Insofar, it may be advantageous to present the data of business data objects within non-pattern based user interfaces as well as within patterns of a pattern based user interface within one display.

For example, according to embodiments, the use of non-pattern based user interfaces may permit a user to perform a side-by-side (SBS) comparison of business objects. Previously, business objects may have been compared according to available patterns in a pattern based user interface in an above-below (A-B) tree format. The above-below tree format, however, is considered to be inconvenient for comparing data. The side-by-side comparison allows displaying data on either side of a frame. This may allow a more natural way to perform comparison for most users. The comparison using a side-by-side format, may allow positioning data in one single row within different columns, insofar allowing improved comparison. For example, the rest of the frame may be designed according to the pattern based user interface, with which the user may be already familiar, and hence the non-pattern based user interface may give the illusion of a seamless continuity of the established patterns.

According to embodiments, general information of business objects is provided within the pattern based user interface, and detailed information of the business objects is provided within the non-pattern based user interface. Thereby, a user may, for example, select within patterns of the pattern based user interface business objects and may as well compare detail data of these business objects within the non-pattern based user interface. For example this comparison may be done using a SBS mode.

According to embodiments, markup-language style sheets may be provided within the non-pattern based interface. Markup-language style sheets may allow flexible design of the non-pattern based user interface. Markup-language style sheets may, for instance, be hypertext markup-language (HTML), extensible markup-language (XML), or any other design language, which may allow device independent design.

To provide a common look-and-feel throughout an entire application, embodiments provide the pattern based user interface for all windows within an application. Patterns may be designed building a floor plan of the PBUI. This floor plan may define which pattern is displayed where on a display. The data may be displayed within the patterns in a defined style. The type of data may be different. Also, different applications or sub-applications may use the same patterns of the PBUI to display their data. For example, the entire hierarchy of an application, e.g. various windows within different hierarchical levels of sub-applications, may look alike, insofar providing easy navigation and easy use of the application for users.

Pattern based user interfaces may, according to embodiments, define combinations of user interface components within the user interface. The definition may concern positioning, size, relative positioning or any other appearance related issues. The user interface components may, for example, constitute a search group, a field group, a toolbar group, a tabstrip group, or any other grouping of components for selecting, editing and browsing data.

According to embodiments, the relative and/or absolute position of user interface components may be defined within the patterns of the pattern based user interface. To provide flexibility in terms of displaying various data, embodiments provide displaying text, file directories, graphics, and/or multimedia content within the non-pattern based user interface. Any other data format may as well be supported. As the non-pattern based user interface allows adjusting the position and size of displaying data within a frame or window, various different types of data may be displayed within the non-pattern based user interface.

Embodiments also provide changing the appearance of the non-pattern based user interface depending on the displayed data. For example, different types of data require different positioning within the window. It may be possible, according to embodiments, to adapt the non-pattern based user interface to the data to be displayed. Insofar, a dynamic display of data may be possible.

Another aspect of the invention is a display of a user interface on a computer with displaying data and/or interrogating user input within a pattern based user interface, and displaying at least data within a non-pattern based user interface.

A further aspect of the invention is a computer program for providing a user-interface the program comprising instructions operable to cause a processor to display data and/or interrogating user input within a pattern based user interface, and display at least data within a non-pattern based user interface.

An additional aspect of the invention is a computer program product with a computer program stored thereon for providing a user-interface the program comprising instructions operable to cause a processor to display data and/or interrogating user input within a pattern based user interface, and display at least data within a non-pattern based user interface.

Further advantages may be derived from the dependent claims. Referring now to the drawings, in which like numerals represent like elements throughout the several figures, aspects of the invention and the exemplary operating environment will be described.

### BRIEF DESCRIPTION OF THE DRAWINGS

The accompanying drawings, which are incorporated in and constitute a part of this specification, illustrate various embodiments of the invention and, together with the description, serve to explain the principles of the invention. In the drawings show:
- Fig. 1: a computer system for implementing a method and a display according to embodiments;
- Fig. 2: a screen-shot of a pattern based user interface with four different pattern based frames;
- Fig. 3: a screen-shot of a pattern based user interface with object identification pattern frames;
- Fig. 4: a screen-shot of a pattern based user interface in combination with a non pattern based user interface;
- Fig. 5: a screen-shot of a non-pattern based pop-up window for displaying business object data;
- Fig. 6: a further screen-shot of a inventive user interface;
- Fig. 7: a flowchart of an inventive method.

### DETAILED DESCRIPTION

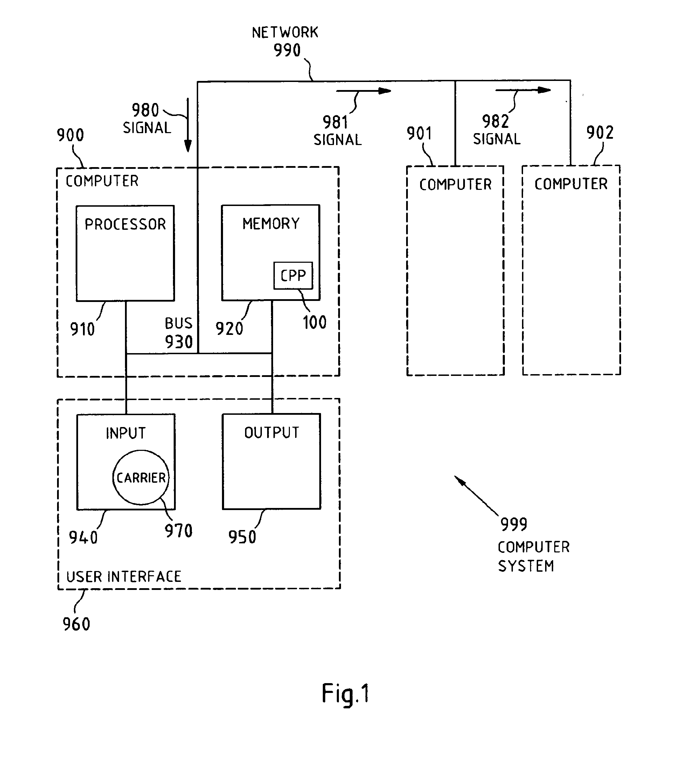

In Figure 1 reference numbers 100/200, 110/210 .. denote similar elements, the function of these elements can be different
Figure 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980. In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like. Processor 910 is, for example, a central processing unit (CPU), a micro-controller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web WWW). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

Prior art system, such as R/3 of SAP, may provide user interfaces, which are completely non-pattern based. These non-pattern based user interfaces may permit completely freestyle programming. The programmers of these non-pattern based user interfaces may have significant flexibility to program and design whatever they want within the user interface. Because programmers often use their freedom to program, the user is left with the problem of different user interfaces across different applications, even within one application. The different interfaces have the drawback of reduced usability, simplicity, and uniformity. Different user interfaces may also introduce an increasing possibility of user introduced data errors. In addition, while non-pattern based user interfaces already include side-by-side comparison functionality, this functionality was available at the expense of definable patterns to guide the user through the application.

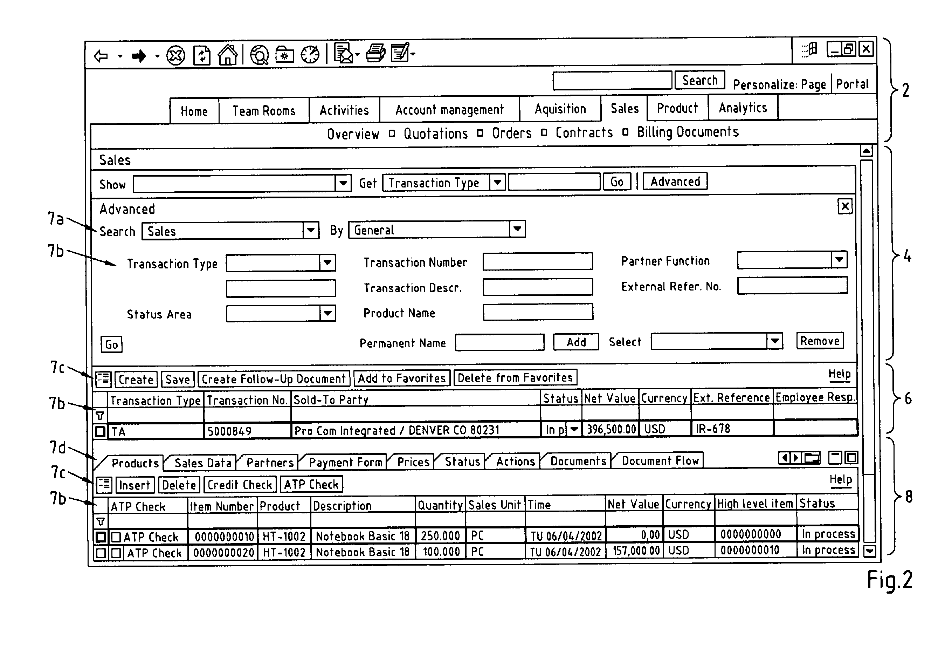

Figure 2 shows a user interface with four different patterns 2-8 within a frame, each pattern 2-8 displaying data within the pattern based user interface. The arrangement of the patterns 2-8 within the shown frame may obey to a floor plan. The floor plan may define, where and how the different patterns 2-8 are arranged within the frame.

A first pattern 2, may be a pattern for user orientation. Different tabs may be provided to allow the user to browse within different areas or sub-applications within the application. These areas may, for instance, be *home, team rooms, activities, account management, acquisition, sales, product, or analytics.* Within pattern 2, a search area may also be provided. The first pattern 2 may provide the same design throughout all windows and sub-applications within the application.

A second pattern 4 may provide information about object search and selection options as well as object identification data. For each of the different tabs *home, team rooms, activities, account management, acquisition, sales, product, or analytics* within the first frame 2, representing different applications, the appearance of the second pattern 4 may be the same. The look-and-feel in the second pattern 4 may be the same for all sub-applications and windows of the respective application.

In addition, a third pattern 6, providing the possibility to edit main attributes of data objects may be provided. Within the third pattern 6, the position and arrangement of tables and tabs, as well as check boxes and buttons, may be defined. To this extend, for each sub-application the same appearance may be provided.

In a forth pattern 8, editing details of main attributes of selected data objects may be presented in a pattern based manner. Insofar, for each object, the design of the forth pattern 8 may always be the same. This may allow the user easy navigation between different data objects.

The patterns may be designed using pattern components. These may be groups of components. For example, the groups search group 7a, field group 7b, toolbar group 7c, and tabstrip group 7d may be provided. Within each group, respective components may be available, providing means to browse, manipulate and display data of various applications or sub-applications.

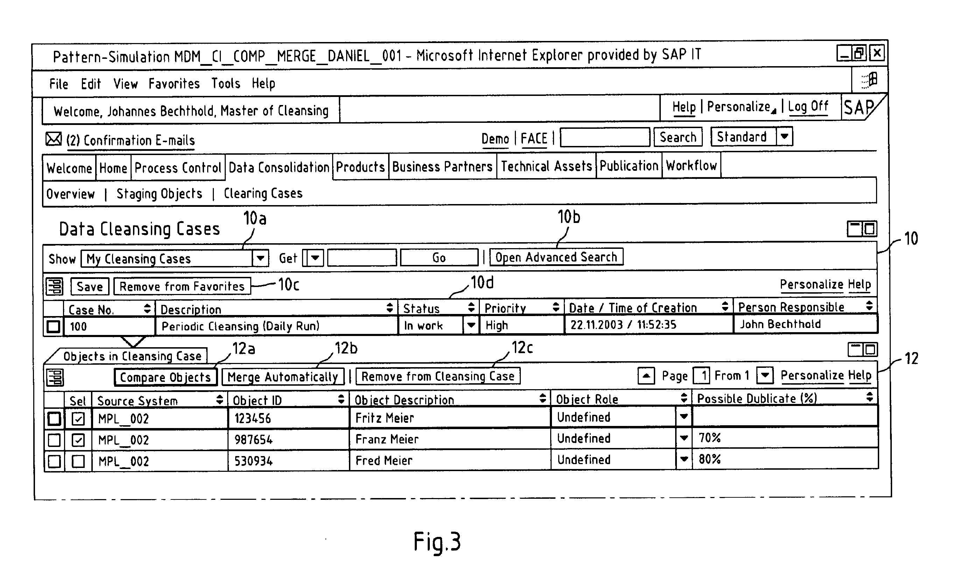

Figure 3 shows a screen shot of an exemplary application providing two patterns 10, 12, which provide the pattern based user interface. The first pattern 10 may be an object identification pattern. This first pattern 10 of the pattern based user interface may be defined as an object identification pattern.

For instance, in an application allowing cleansing of data, in particular duplicates of data, which application will be described in the following, this pattern 10 may display the cleansing cases which are available for processing. The user may select a single cleansing case for processing. The object identification pattern 10 may display the most important attributes of a particular cleansing case, for example case number, description, priority, and other attributes.

A pull-down menu 10a may provide different default queries for displaying cleansing cases. These may for instance be show *"my cleansing cases"* and show *"my cleansing cases for today".* The first query may display all cleansing cases which may be assigned to a current user, whereas the latter query may display all cleansing cases assigned to the current user which are to be processed on the current date.

An *advanced search* button 10b may provide the user with the possibility to search for cleansing cases by attributes, for example, by user, priority, description, or by objects that are contained in a cleansing case, for example, display cleansing cases for a specific business partner.

A toolbar and container row 10c may be provided comprising various buttons. For example, these buttons may be a safe button, allowing the user to safe a currently processed cleansing case and its objects in a specified status. A delete button (not depicted) may allow the user to delete outdated cleansing cases from his work list. The delete button may only be active if the user has selected an outdated cleansing case.

A check matching score button (not depicted) may also be provided, which may only be active if the cleansing case contains an object that has changed since the cleansing case was created. In such a case, the user may select the check matching score button to trigger an online duplicate check.

A cleansing case status pull-down menu 10d may also be provided, displaying the cleansing case status of the current object. These statuses may be:
- *new,* in case the cleansing case and its objects have not yet been processed,
- *in work,* in case the cleansing case and its objects are in work status,
- rejected, in case the objects in the cleansing case do not match at all,
- *release,* in case the objects in the cleansing case match, and
- outdated, in case a new cleansing case was created for the referenced object in the current cleansing case.

A second pattern 12 may provide data as an object data pattern 12. The object data pattern 12 may allow users to see all available objects, for example business partner records, or other data, which are contained in a respective cleansing case selected within pattern 10. This pattern 12 may display in a pattern based manner the important attributes of the individual objects. A user may select any two objects for a comparison by marking the check boxes next to the desired objects. The pattern 12 may be used according to embodiments for any kind of data selected within pattern 10. The pattern 12 may also be used for any kind of application. The floor plan of the pattern based user interface may define that pattern 12 allows displaying information about data selected in pattern 10. Insofar, different applications may appear similarly, as the same patterns are used according to the floor plan in different applications, or sub-applications for different types of data.

In the pattern 12, different toolbar functions may be available in a pattern based manner, thereby providing the buttons within all applications at the same position. The functions may be provided by a *compare objects* button 12a, which allows comparing selected objects, and a *merge* *automatically button* 12b, which allows merging objects automatically according to defined rules. A *remove from cleansing case* button 12c allows removing these objects form the cleansing case.

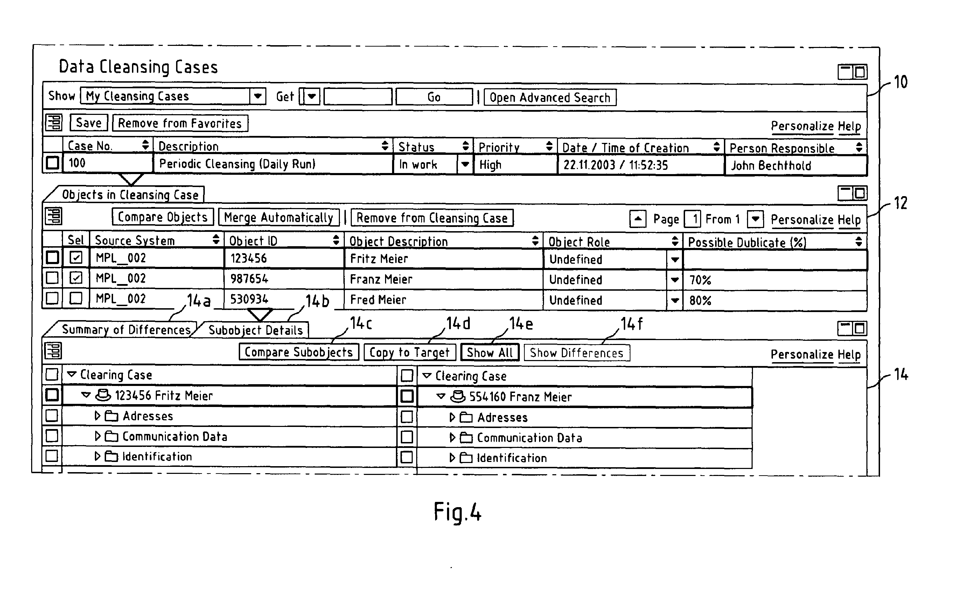

Figure 3 shows a pattern based user interfaces, providing a user with the same look-and-feel throughout all sub-applications or windows by providing the same patterns 10, 12 according to a floor plan. After having selected a cleansing case in pattern 10, and having selected objects, which are to be compared in pattern 12, a user may click the compare objects button 12a providing a non-pattern based frame 14, as depicted in Figure 4.

Figure 4 depicts a screen-shot with the patterns 10, 12 of the pattern based user interface in combination with a non-pattern based frame 14. This non-pattern based frame 14 may be provided to allow comparing objects. The non-pattern based frame 14 may provide detail information about objects which were selected within pattern 12. A user may compare the sub-object attributes of two selected business objects and merge these sub-object attributes.

The non-pattern based user interface, frame or window may be distinguished by allowing placing objects at any place within the window. The design is freely programmable. No constraints due to a pattern of a pattern based user interface needs to be obeyed. The non-pattern based user interface may be a new window of an application, which is not restricted to patterns of the pattern based user interface of the application.

By clicking on a *Summary of Differences* tab 14a, a user may see an overview over all sub objects which may be different between two objects which were selected for comparison. Insofar, the user may quickly see where sub-object comparison needs to be carried out.

By clicking a *Subobjects Details* tab 14b, as depicted, the contents of the sub-objects, for example, the address of a business partner, for two selected objects may be displayed. These sub-object details for each select object may be displayed as adjacent trees in a side-by-side manner. Insofar, a table may be provided with two columns, each column comprising one of the data objects to be compared. The rows of the table may comprise the respective attributes of the objects.

Non-pattern based user interface 14 may also provide in a non-pattern based manner toolbar buttons, which may be a *Compare Subobjects* button 14c, which allow comparing to sub objects selected in the table and displaying the details on attribute level in a pop-up window. A *Copy to Target* button 14d may be provided. This button 14d may allow copying a selected sub-object to a target sub-object. A *Show All* button 14e may also be provided, allowing showing all sub objects of selected objects. In addition, a *Show Differences* button 14f may be provided, allowing displaying those attributes that contain differences.

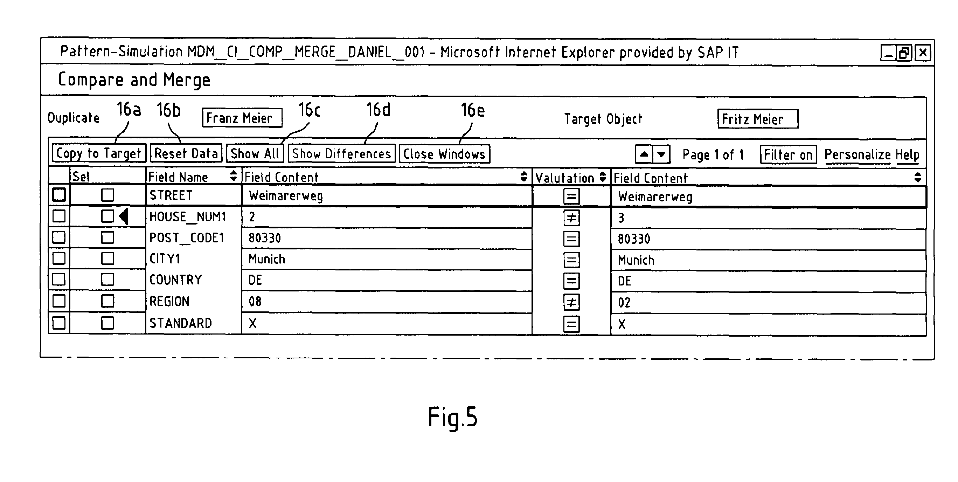

After having selected one attribute of the objects, and having depressed the *Compare Subobjects* button 14c, a compare and merge pop-up window, as depicted in Figure 5, may be displayed. This window may be a non-pattern based window, showing the details of the selected sub-objects on attribute level within one table view. The user may compare two selected objects and may merge data at attribute level, if necessary, by copying attributes from one column to the other.

Different functionality may be provided through buttons 16, which may be a *Copy to Target* button 16a. This *Copy to Target* button 16a, may allow copying the selected sub-object to a target object. A Reset Data button 16b may allow resetting changed data. A *Show All* button 16c may allow showing all attributes of a sub-object, irrespective of any differences. A *Show Differences* button 16d my allow showing all differences of attributes. A *Close Window* button 16e may cause closing the window shown in Figure 5.

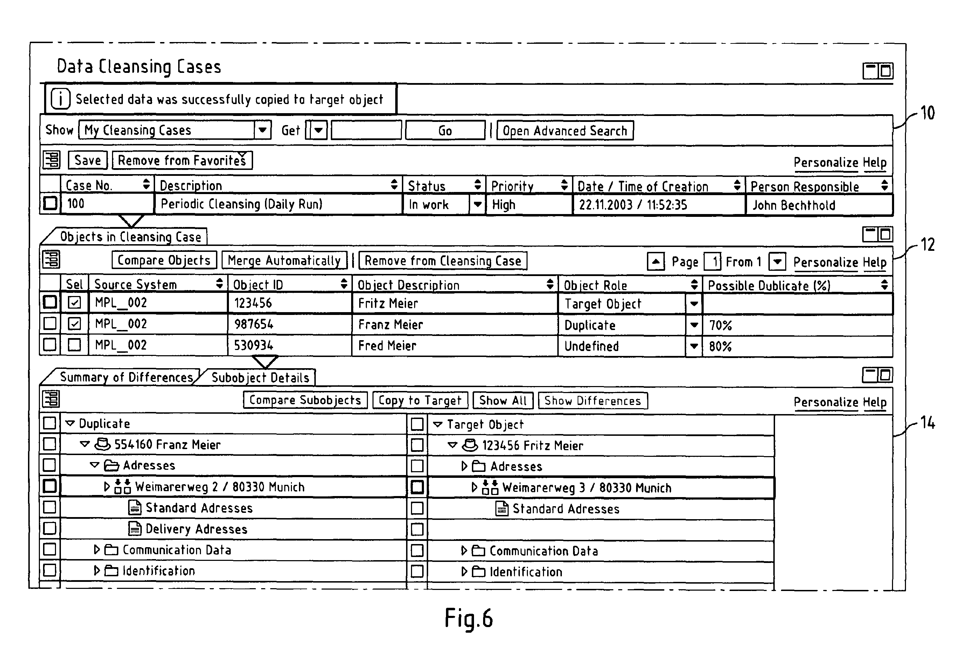

Figure 6 depicts a screen-shot of an inventive display, wherein two sub-objects of a cleansing project shown in pattern 10 and selected in pattern 12 have been compared in non-pattern based user interface 14. Data has been merged between these objects. After the data has been copied to the target object, a result message may be displayed in pattern 10, informing the user about the result of the cleansing process.

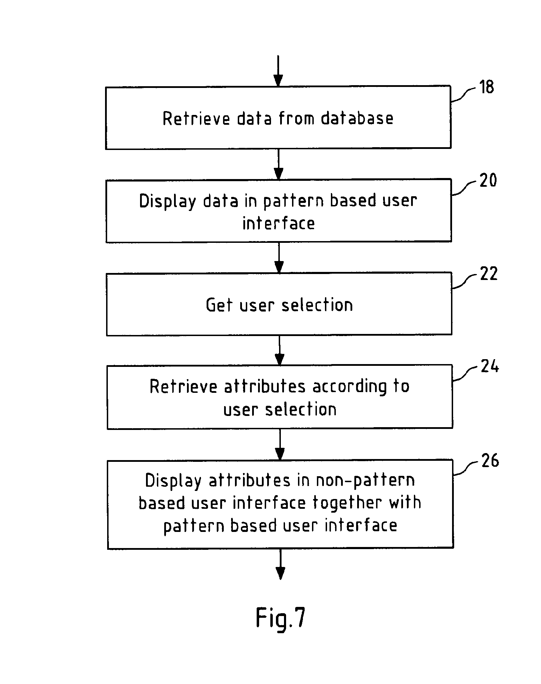

Figure 7 shows a flow chart of an inventive method. To display data, data is retrieved from a data base (18). After data has been read from the data base (18) it is displayed within patterns of a pattern based user interface (20). A user may select data objects within the pattern based user interface, and the user selection may be retrieved (22). According to the retrieved user selection, attributes of the respective data objects may be retrieved (24). The retrieved attributes may be displayed in a non-pattern user interface together with the pattern based user interface (26).

### REFERENCE NUMBERS

- 2-12: patterns
- 10a: pull-down menu
- 10b: advanced search button
- 10c: toolbar and container row
- 10d: pull-down menu
- 12a: compare objects button
- 12b: merge automatically button
- 12c: remove from cleansing case button
- 14: non-pattern based user interface
- 14a: Summary of Differences tab
- 14b: Subobjects Details tab
- *14c*: Compare Subobjects button
- 14d: Copy to Target button
- 14e: Show All button
- 14f: Show Differences button
- 16a: Copy to Target button
- 16b: Reset Data button
- 16c: Show All button
- 16d: Show Differences button
- 16e: Close Window button
- 18: retrieve data from database
- 20: display data in pattern based user interface
- 22: get user selection
- 24: retrieve user selection
- 26: display attributes in non-pattern base user interface
- 100: computer program product
- 900: computer
- 910: processor
- 920: memory
- 930: bus
- 940: input device
- 950: output device
- 960: user interface
- 970: program carrier
- 980: program signal
- 990: computer network
- 999: computer network system

## Claims

1. Computer-implemented method for providing a user-interface with
- providing an application for displaying data and/or interrogating user input within a pattern based user interface, and
- providing within the application a non-pattern based user interface at least for displaying data.

2. The computer-implemented method of claim 1, with displaying business object data of at least two business objects within the non-pattern based user interface.

3. The computer-implemented method of claim 2, with displaying the business object data of at least two business objects on a side-by-side basis within the non-pattern based user interface.

4. The computer-implemented method of any one of claims 1 to 3, with providing the non-pattern based user interface within at least one frame separated from the pattern based user interface.

5. The computer-implemented method of any one of claims 1 to 4, with providing general information of business objects within the pattern based user interface and providing detail information of the business objects within the non-pattern based user interface.

6. The computer-implemented method of any one of claims 1 to 5, with providing markup-language style sheets within the non-pattern based user interface.

7. The computer-implemented method of any one of claims 1 to 6, with providing the pattern based user interface for all windows within an application.

8. The computer-implemented method of any one of claims 1 to 7, wherein the pattern based user interface is defined within the application on different hierarchy levels.

9. The computer-implemented method of any one of claims 1 to 8, with defining combinations of user interface components within the pattern based user interface.

10. The computer-implemented method of claim 9, with defining the relative and/or absolute position of user interface components within the pattern based user interface.

11. The computer-implemented method of any one of claims 1 to 10, with providing text, file directories, graphics, and/or multimedia content within the non-pattern based user interface.

12. The computer-implemented method of any one of claims 1 to 11, with providing changing appearance of the non-pattern based user interface depending on the displayed data.

13. Display of a user-interface on a computer, in particular according to a method of any one of claims 1 to 12, with
- displaying data and/or interrogating user input within a pattern based user interface, and
- displaying at least data within a non-pattern based user interface.

14. Computer program for providing a user-interface, in particular according to a method of any one of claims 1 to 12, the program comprising instructions operable to cause a processor to
- display data and/or interrogating user input within a pattern based user interface, and
- display at least data within a non-pattern based user interface.

15. Computer program product with a computer program stored thereon for providing a user-interface, in particular according to a method of any one of claims 1 to 12, the program comprising instructions operable to cause a processor to
- display data and/or interrogating user input within a pattern based user interface, and
- display at least data within a non-pattern based user interface.
